# EUROPEAN PATENT APPLICATION

(11) **EP 4 841 295 A1**
(43) Date of publication of application: **18.11.2026**
(21) Application number: 25176372.8
(22) Date of filing: 14.05.2025
(51) Int. Cl.: G01S 7/40, G01S 13/52, G01S 13/58, G01S 13/60, G01S 13/931

(54) **METHOD FOR CALIBRATING A DOPPLER SENSOR SYSTEM MOUNTABLE TO A VEHICLE, METHOD FOR ESTIMATING A VEHICLE MOTION VECTOR OF A VEHICLE WHILE THE VEHICLE IS MOVING, DATA PROCESSING APPARATUS, COMPUTER PROGRAM, COMPUTER-READABLE STORAGE MEDIUM, AND DOPPLER SENSOR SYSTEM MOUNTABLE TO A VEHICLE**

(71) Applicant: Volvo Car Corporation, 405 31 Göteborg (SE)
(72) Inventor: VAKILI, Iman, 40531 Göteborg (SE); VANÄS, Karl, 40531 Göteborg (SE); TELL, Sara, 40531 Göteborg (SE); BEVILACQUA, Stella, 40531 Göteborg (SE); PETERSSON, Julius, 40531 Göteborg (SE)
(74) Representative: Kransell & Wennborg KB

(57) **Abstract**

The disclosure relates to a method for calibrating a Doppler sensor system (30) mountable to a vehicle (10). The method comprises obtaining first data (D1) indicative of Doppler sensor detections of an environment of the vehicle (10) originating from a plurality of Doppler sensors (32) mountable to the vehicle (10). The Doppler sensor detections comprise angular information. The method further comprises estimating a vehicle motion vector based on the first data (D1), and determining an angular detection error based on the first data (D1) and based on the estimated vehicle motion vector. Alternatively, the method comprises determining an angular detection error and/or a vehicle motion vector based on the first data (D1) using a trained data model (64). Finally, the method comprises providing second data (D2) indicative of the angular detection error and/or the vehicle motion vector. The disclosure is also directed to a method for estimating a vehicle motion vector of a vehicle (10) while the vehicle (10) is moving. Moreover, a data processing apparatus (40), a computer program (62), a computer-readable storage medium (60), a Doppler sensor system (30), and a calibration system (54) are described.

## Description

### TECHNICAL FIELD

The present disclosure relates to a method for calibrating a Doppler sensor system. The Doppler sensor system is mountable to a vehicle.

Moreover, the present disclosure is directed to a method for estimating a vehicle motion vector of a vehicle. The method estimates the vehicle motion vector while the vehicle is moving.

Furthermore, the present disclosure relates to a data processing apparatus, to a computer program and to a computer-readable storage medium.

Additionally, the present disclosure is directed to a Doppler sensor system mountable to a vehicle and to a calibration system for a Doppler sensor system.

### BACKGROUND

Vehicle odometry is the method of estimating a position and an orientation of an ego-vehicle together with a change of position and/or orientation over time, i.e. a speed of the ego-vehicle. To this end, data originating from wheel speed sensors may be used. The data originating from wheel speed sensors may be corrected by position data of a global navigation satellite system in order to compensate for a drift error that may occur due to an integration of wheel speed over time. However, a connection to a global navigation satellite system may not be reliably available in every location. Additionally, in high-dynamic driving maneuvers, wheel slip may further add to an inaccuracy in vehicle odometry that may not be possible to be compensated by means of position data from a global navigation satellite system in a timely manner.

A Doppler sensor system potentially has the capabilities to provide accurate vehicle odometry in high-dynamic driving maneuvers without relying on a global navigation satellite system. However, when Doppler sensors of the Doppler sensor system are mounted to the ego-vehicle, they may be subject to misalignment in their actual position and orientation on the ego-vehicle as compared to a desired position and desired orientation on the ego-vehicle. Moreover, Doppler sensors are usually hidden behind an exterior hull of the ego-vehicle for aesthetic reasons. The exterior hull of the ego-vehicle may interfere with signals from the Doppler sensors. Since the exterior hull of the ego-vehicle may not comprise uniform Doppler signal transmission properties, a Doppler sensor behind the exterior hull of the ego-vehicle may additionally be subject to a detection error that varies across a field of view of the Doppler sensor. Such angular detection errors may lead to inaccurate results in vehicle odometry estimation.

### SUMMARY

It is therefore an objective of the present disclosure to provide an improved method for calibrating a Doppler sensor system that is mountable to a vehicle such that an angular detection error of the Doppler sensor system and/or a vehicle motion vector may be estimated at an increased accuracy.

The problem is at least partially solved or alleviated by the subject matter of the independent claims of the present disclosure, wherein further examples are incorporated in the dependent claims.

According to a first aspect, there is provided a method for calibrating a Doppler sensor system mountable to a vehicle. The method comprises:
- obtaining first data indicative of Doppler sensor detections of an environment of the vehicle originating from a plurality of Doppler sensors mountable to the vehicle, wherein the Doppler sensor detections comprise angular information,
- estimating a vehicle motion vector based on the first data, and determining an angular detection error based on the first data and based on the estimated vehicle motion vector, or
   determining an angular detection error and/or a vehicle motion vector based on the first data using a trained data model, and
- providing second data indicative of the angular detection error and/or the vehicle motion vector.

The Doppler sensor system may comprise any type of Doppler sensors, for example radar sensors, ultrasonic sensors and/or lidar sensors. A common feature of all Doppler sensors is that a Doppler signal is emitted by the Doppler sensor. The Doppler signal may be reflected by an object in the field of view of the Doppler sensor. Depending on a speed of the object relative to the Doppler sensor, a wavelength of the Doppler signal may be changed in the reflection. The Doppler sensor may receive at least parts of the reflected Doppler signal. From a difference in wavelength of the emitted Doppler signal to a wavelength of the received Doppler signal, a speed of the object relative to the Doppler sensor may be obtained. More precisely, a speed of the object relative to the Doppler sensor along a direction of a direct connection between the object and the Doppler sensor may be determined. Such a speed may also be referred to as a radial speed or a radial velocity of the object relative to the Doppler sensor. Also, such a speed may be referred to as a measured Doppler speed or a measured Doppler velocity. Additionally, an angular position of the object relative to the Doppler sensor may be determined based on the fact that an angular position of the Doppler sensor on the vehicle is known. The measured Doppler velocity and the angular position of the object are comprised in the first data that is obtained. It is noted that obtaining the first data may comprise receiving or determining the first data. In a spherical coordinate system, the angular position of an object may comprise an azimuth as well as an elevation angle of the object relative to the Doppler sensor. By comparing angular positions of the object relative to the Doppler sensor from different points in time, an angular speed vector of the object relative to the Doppler sensor may be obtained.

In the present context, it is understood that the object is located exterior to the vehicle. In other words, the object is situated in an environment, i.e. in the surroundings of the vehicle. The first data comprises Doppler sensor detections of an environment of the vehicle from at least two Doppler sensors that are mountable to the vehicle. The at least two Doppler sensors may comprise overlapping fields of view, meaning that they may sense the same object within their respective fields of view but from a different perspective. The different perspective is due to the fact that the at least two Doppler sensors are mountable at different positions on the vehicle. Alternatively, the at least two Doppler sensors may comprise fields of view that do not overlap. Thus, the at least two Doppler sensors may sense different objects or different portions of the same object within their respective fields of view. In any case, a vehicle motion vector, i.e. a vector indicating a position, an orientation, and a speed of the vehicle, may be estimated based on the first data. More precisely, a vehicle motion vector may be estimated from a radial speed vector of objects in their respective field of view of the at least two Doppler sensors. This is possible under the assumption that a relative position and relative orientation of the Doppler sensors of the Doppler sensor system remains constant while obtaining the first data indicative of Doppler sensor detections of the environment of the vehicle.

According to a first alternative of the present disclosure, the angular detection error for each Doppler sensor of the plurality of Doppler sensors may be obtained by comparing the estimated vehicle motion vector with the radial speed vector of an object detected by an individual Doppler sensor. Thus, the angular detection error for each Doppler sensor of the plurality of Doppler sensors is obtained based on the first data and based on the estimated vehicle motion vector. In other words, the angular detection error for each Doppler sensor of the plurality of Doppler sensors is obtained as a function of the first data and the estimated vehicle motion vector. Still in other words, the angular detection error for each Doppler sensor of the plurality of Doppler sensors is obtained as an output when providing the first data and the estimated vehicle motion vector as an input to a comparison function.

According to a second alternative of the disclosure, the angular detection error and/or the vehicle motion vector may be determined using a trained data model. To this end, the data model is designed and trained to be able to take the first data indicative of Doppler sensor detections of an environment of the vehicle originating from a plurality of Doppler sensors mountable to the vehicle as an input. The data model may be trained by providing the data model with vehicle odometry data that is based on signals from wheel speed sensors indicative of wheel speeds of road wheels of the vehicle and/or on position signals from a global navigation satellite system. During training, the vehicle odometry data that is based on signals from wheel speed sensors and/or on position signals from a global navigation satellite system may be used as a ground truth. Still during training, the trainable data model may be configured to minimize a prediction error between a prediction of the vehicle motion vector that is based on the first data and a vehicle motion vector that is based on the ground truth. Additionally or alternatively, during training, the trainable data model may be configured to minimize a prediction error between a prediction of the angular detection error of each Doppler sensor of the plurality of Doppler sensors that is based on the first data and an angular detection error that is based on the ground truth. Thus, after training and during application of the trained data model, the trained data model may be configured to provide an angular detection error of each Doppler sensor of the plurality of Doppler sensors and/or a vehicle motion vector as an output when provided with the first data as an input. It is understood that different datasets of first data are provided to the data model during training and application, e.g. from a training drive sequence and from a testing drive sequence.

The determined vehicle motion vector and/or the determined angular detection error of each Doppler sensor of the plurality of Doppler sensors is provided as an output of the method for calibrating a Doppler sensor system mountable to a vehicle. In other words, the method for calibrating a Doppler sensor system mountable to a vehicle takes first data indicative of Doppler sensor detections of an environment of the vehicle as input data and provides second data indicative of the vehicle motion vector and/or of the angular detection error of each Doppler sensor of the plurality of Doppler sensors as output data. Thus, the obtained first data may be corrected using the angular detection error. This has the effect that a position, an orientation, and a speed of the vehicle relative to its environment may be determined from first data without the need for data from a global navigation satellite system that corresponds to data items of the first data. In other words, the provided second data does not need to be corrected by data from a global navigation satellite system. This increases a reliability of the method for calibrating a Doppler sensor system mountable to a vehicle, particularly in areas in which a signal from a global navigation satellite system is not readily available, e.g. in an underground car park or under bridges or in tunnels. Moreover, an accuracy of the provided second data may be increased particularly for high-dynamic driving maneuvers compared to methods that use wheel speed sensors for obtaining a rotational speed of road wheels of the vehicle, which may slip in high-dynamic driving maneuvers, when providing the second data.

In an example, the first data is associated with the vehicle travelling on a straight path and/or with a yaw rate of the vehicle below a predetermined yaw rate threshold. If the vehicle travels on a straight path, the yaw rate of the vehicle is zero or at least substantially zero. This means that the vehicle does not turn or rotate around its height axis. The height axis of the vehicle is defined as an axis that is perpendicular to a road surface on which the vehicle is traveling. If the first data corresponds to a driving scenario in which the vehicle is traveling on a straight path, the provided angular detection error and/or the provided vehicle motion vector may be of a particularly high accuracy. If the first data corresponds to the driving scenario in which the vehicle is traveling at a yaw rate that is below the predetermined yaw rate threshold, an acceptable accuracy of the provided angular detection error and/or of the provided vehicle motion vector may still be achieved. Moreover, if the yaw rate of the vehicle is zero, substantially zero or at least below the predetermined yaw rate threshold, an orientation of the vehicle motion vector may be preset in the estimation of the vehicle motion vector based on the first data to a direction that is parallel to a standard forward driving direction the vehicle. The standard forward driving direction of the vehicle is a driving direction of the vehicle in which the vehicle does not make a turn, i.e. does not turn to the left or to the right, and is driving in a forward direction. This may facilitate the estimation of the vehicle motion vector and/or of the angular detection error based on the first data. In particular, the vehicle motion vector and/or the angular detection error of each Doppler sensor of the plurality of Doppler sensors may be provided at an increased level of accuracy. At the same time, computational effort to estimate the vehicle motion vector and/or the angular detection error based on the first data may be reduced.

In an example, the vehicle motion vector is estimated based on additional third data indicative of the yaw rate of the vehicle. In this example, the first data does not need to be associated with the vehicle traveling on a straight path. This has the effect that the angular detection error of each Doppler sensor of the plurality of Doppler sensors and/or the vehicle motion vector may be estimated based on the first data in any driving situation. The third data indicative of the yaw rate of the vehicle may be obtained from a yaw rate sensor that is part of the vehicle. The yaw rate sensor may comprise a compass or, preferably, a gyroscope of the vehicle. Based on the yaw rate of the vehicle, a heading of the vehicle at each position of the plurality of Doppler sensors may be estimated. In other words, a direction of movement of each Doppler sensor of the plurality of Doppler sensors may be estimated based on the yaw rate of the vehicle. To this end, rigid body kinematics may be applied, i.e. the vehicle to which the plurality of Doppler sensors are mounted is assumed to be a rigid object. Estimating the vehicle motion vector based on additional third data indicative of the yaw rate of the vehicle allows the angular detection error of each of the plurality of Doppler sensors to be estimated in a simple and reliable manner. In more detail, an error in azimuth angle of each of the plurality of Doppler sensors may be obtained at a high level of accuracy.

In an example, estimating the vehicle motion vector comprises solving an optimization problem or determining a median of Doppler velocities of the first data corrected by corresponding angular information of the first data. Additionally or alternatively, determining the angular error comprises solving an optimization problem. Solving an optimization problem for estimating the vehicle motion vector may comprise finding a vehicle motion vector that minimizes a difference between a measured Doppler velocity of an object in the field of view of a Doppler sensor and a modeled Doppler velocity of the object in the field of view of the Doppler sensor. In this context, the modeled Doppler velocity of the object in the field of view of the Doppler sensor comprises the measured Doppler velocity corrected by the angular detection error. Solving an optimization problem in order to determine the angular error may comprise defining a cost function that minimizes a difference between a measured Doppler velocity of an object in the field of view of a Doppler sensor and a modeled Doppler velocity of the object in the field of view of the Doppler sensor. The cost function may be a function of angular detection errors in azimuth angle and in elevation angle of the Doppler sensor. The cost function may be solved for angular detection errors in azimuth angle and in elevation angle of the Doppler sensor by means of Orthogonal Distance Regression or a method of least squares. Determining a median of Doppler velocities of the first data corrected by corresponding angular information of the first data may be understood in that Doppler velocities of objects in the environment of the vehicle corrected by angular detection errors may be averaged over a field of view or at least over a subset thereof in order to estimate the vehicle motion vector. This comes back to determining the most probable Doppler velocity. Additionally or alternatively, the averaging may comprise determining an arithmetic or a geometric mean. Accounting for angular detection errors of the Doppler sensors of the plurality of Doppler sensors has the effect that the vehicle motion vector of the vehicle to which the plurality of Doppler sensors are mounted may be estimated in a more accurate manner.

In an example, the determined angular detection error comprises a local angular detection error and/or a global angular detection error. The local angular detection error refers to an angular detection error that is specific for each point in a field of view of a Doppler sensor of the Doppler sensor system. Thus, the local angular error of a Doppler sensor may vary over the field of view of that Doppler sensor. This may, for example, be due to an exterior hull of the vehicle behind which the Doppler sensor is mounted to the vehicle. The exterior hull of the vehicle may not comprise uniform Doppler signal transmission properties over the entire field of view of that Doppler sensor. The exterior hull of the vehicle may be referred to as radar fascia, which may comprise, e.g., a bumper, an emblem, a cover of the vehicle. The global angular detection error refers to an angular detection error that applies systematically to the whole field of view of a Doppler sensor of the Doppler sensor system. This may, for example, be due to a misalignment of the Doppler sensor with respect to its desired position. Such a misalignment may occur during assembly of the vehicle or during use, in particular due to an accident deforming a mounting flange of the vehicle to which the Doppler sensor is mounted. The global angle error of a Doppler sensor may be determined by averaging an angular error of a Doppler sensor over its entire field of view. The averaging may comprise calculating a geometric mean, an arithmetic mean or a median. Additionally or alternatively, the averaging may comprise determining a weighted average. A remaining portion of the angular error that cannot be explained by the global angle error may be defined as the local angle error. Distinguishing between global angular error and local angular error of a Doppler sensor has the effect that even fine and varying distortions of Doppler sensor signals over the field of view of a Doppler sensor may be accounted for. Thus, the Doppler sensor system may be calibrated highly accurately and the vehicle motion vector may be obtained at a low level of uncertainty.

In an example, the method further comprises enhancing an accuracy of the estimated vehicle motion vector using a random search algorithm and/or a gradient descent optimization. The random search algorithm and/or the gradient descent optimization may minimize a discrepancy between modeled Doppler velocities and measured Doppler velocities of objects in the environment of the vehicle. The random search algorithm and/or the gradient descent optimization may iteratively estimate global angle errors and local angle errors of all Doppler sensors of the Doppler sensor system. The random search algorithm and/or the gradient descent optimization may be initialized by azimuth angles and elevation angles of the first data, i.e. of the Doppler sensor detections of the environment of the vehicle. The estimates for the global angle errors and for the local angle errors may be subtracted from the results for the azimuth angles and for the elevation angles of a previous iteration step to achieve a convergence in the estimate for the vehicle motion vector. Thus, the effect of this example is that an accuracy of the vehicle motion vector, i.e. a discrepancy between the vehicle motion vector provided by the present method and a true vehicle motion vector of the vehicle is minimized.

In an example, the trained data model comprises an artificial neural network. The artificial neural network may comprise an input layer that is capable of receiving the first data from the plurality of Doppler sensors of the Doppler sensor system. This may mean that the input layer comprises a number of input nodes that is equal to a number of Doppler sensors or to a multiple thereof. In a particular example, the input layer comprises a number of input nodes that is equal to a number of points in the fields of view of the plurality of Doppler sensors of the Doppler sensor systems. In other words, the number of input nodes may be the same as a resolution of the Doppler sensor system. In another example, separate but identical artificial neural networks may be used to calibrate each Doppler sensor of the Doppler sensor system. It is understood that each of the separate but identical artificial neural networks may be trained by first data that originates from that Doppler sensor that an artificial neural network is associated with. Thus, even if identical artificial neural networks are used, each artificial neural network may be trained and tailored to calibrate that Doppler sensor of the Doppler sensor system that that artificial neural network is associated with. The artificial neural network may be trained on first data from the training drive sequence. Additionally, vehicle odometry data, i.e. from wheel speed sensors, the yaw rate sensor and/or from a global navigation satellite system, may be obtained during the training drive sequence as ground truth data. The artificial neural network may be trained to minimize a discrepancy between its prediction, i.e. the predicted angular detection errors and the predicted vehicle motion vector, and the ground truth data. Thus, the artificial neural network may be trained using a method of supervised learning. It is understood that the artificial neural network may comprise an output layer having output nodes that are capable of providing the vehicle motion vector and/or the angular detection error. In a particular example, there may be three output nodes to provide the vehicle motion vector, i.e. one node for each coordinate direction. Additionally or alternatively, there may be two output nodes for each Doppler sensor for providing the global angular error in azimuth angle as well as in elevation angle of a Doppler sensor. Further additionally or alternatively, there may be twice as many output nodes for each Doppler sensor as there are detection points in that Doppler sensor, i.e. twice as many output nodes as the resolution of the Doppler sensor. Thus, a local angle error in azimuth angle and a local angle error in elevation angle may be provided for each detection point of each Doppler sensor. Using an artificial neural network for calibrating the Doppler sensor system has the effect that a quick convergence to an accurate solution for the vehicle motion vector and/or for the angular detection error of the Doppler sensor system may be achieved. Moreover, manual programming effort in a development phase of the method may be reduced. Furthermore, an artificial neural network may adapt to changes of the angular detection errors during use of the vehicle. For example, a change in local angle errors, both in azimuth angle and in elevation angle may be accounted for, if the vehicle is already in use, i.e. with a customer. A change in local angle errors may, for example, occur because of an accident that caused the exterior hull of the vehicle, behind which a Doppler sensor of the Doppler sensor system is mounted, to be deformed.

In an example, estimating the vehicle motion vector comprises determining a first model of stationary and moving objects based on the first data and estimating a preliminary vehicle motion vector based on the first model. The first model may be understood as a first rough estimate of stationary and moving objects in the environment of the vehicle. Based on the first rough estimate of stationary objects in the environment of the vehicle, a first rough estimate of the vehicle motion vector, i.e. the preliminary vehicle motion vector, may be obtained. The preliminary vehicle motion vector may be used in further steps of the method to enhance a speed of convergence to a more accurate vehicle motion vector. The convergence from a first rough estimate of the vehicle motion vector to a more accurate vehicle motion vector may be quicker than a convergence from a vehicle motion vector obtained based on wheel speeds, a yaw rate and/or a global navigation satellite system or even from a random estimate of the vehicle motion vector.

In an example, estimating the vehicle motion vector comprises determining a second model of stationary and moving objects based on the first data and based on the preliminary vehicle motion vector. The second model may be understood as a second refined estimate of stationary and moving objects in the environment of the vehicle. In particular, the definition of the cost function that is to be minimized and solved for angular detection errors, i.e. angular detection errors in azimuth angles and elevation angles, may be based on the second model of stationary and moving objects. Providing a model of stationary and moving objects in a two-stage process and, thus, a highly accurate second model, has the effect that angular detection errors may even be determined to a satisfactory level of accuracy even if first data from only one point in time is used to calibrate the Doppler sensor system.

According to a second aspect, there is provided a method for estimating a vehicle motion vector of a vehicle while the vehicle is moving. The method comprises:
- obtaining first data indicative of Doppler sensor detections of an environment of the moving vehicle originating from a plurality of Doppler sensors mounted to the vehicle,
- calibrating the Doppler sensor system mounted to the vehicle using the method according to the first aspect or wherein the Doppler sensor system is provided in a state in which it has been calibrated using the method according to the first aspect,
- determining a model of stationary and moving objects based on the first data, and
- estimating the vehicle motion vector based on the model.

The method according to the second aspect of the disclosure aims to provide an estimate of the vehicle motion based on data that has been calibrated taking account of angular detection errors of the Doppler sensor system. To this end, first data of objects in the exterior, i.e. in the surroundings, i.e. in the environment of the vehicle, to which the plurality of Doppler sensors of the Doppler sensor system are mounted, are obtained. Obtaining the first data may be understood as receiving or determining the first data. It is noted that the first data may be obtained regardless of any specific yaw rate of the vehicle. In other words, the method according to the second aspect may be carried out in any driving scenario of the vehicle. The first data may be corrected by the second data, in particular by angular detection errors of the Doppler sensor system, as provided by the method of the first aspect. Alternatively, the Doppler sensor system may be provided in a calibrated state, i.e. the first data that the Doppler sensor system obtains during execution of the method of the second aspect is already corrected first data, i.e. takes account of angular detection errors of the Doppler sensor system. From the corrected first data, the model of stationary and moving objects in the environment of the vehicle is obtained. Particularly based on Doppler velocities of the stationary objects, the vehicle motion vector may be estimated. The method according to the second aspect has the effect that the vehicle motion vector, i.e. a vector indicating a position, an orientation, and a speed of the vehicle, may be estimated in an accurate manner even in high-dynamic driving scenarios, in which road wheels of the vehicle may be subject to slippage, and/or in situations in which a position signal form a global navigation satellite system cannot be obtained or at least cannot be obtained in a timely manner. This may be particularly advantageous for autonomous or at least partly autonomous vehicle, which rely heavily on knowing the vehicle's position relative to objects in their environment, because a human driver is not expected to provide control inputs to the vehicle at all or at least to a reduced extent. An autonomous or at least partly autonomous vehicle's driving maneuvers are more accurate and reliable if the vehicle knows its precise vehicle motion vector within the model of stationary and moving objects in the environment of the vehicle and if the vehicle motion vector has been corrected by angular detection errors of the Doppler sensor system.

The methods of the first and of the second aspect may be at least partly computer-implemented, and may be implemented in software or in hardware, or in software and hardware. Further, the methods of the first and of the second aspect may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a third aspect, there is provided a data processing apparatus comprising means for carrying out the method of the first aspect and/or for carrying out the method of the second aspect. Providing such a data processing apparatus has the effect that a position, an orientation, and a speed of the vehicle relative to its environment may be determined from first data without the need for data from a global navigation satellite system that corresponds to data items of the first data. In other words, the provided second data does not need to be corrected by data from a global navigation satellite system. This increases a reliability of the method for calibrating a Doppler sensor system mountable to a vehicle, particularly in areas in which a signal from a global navigation satellite system is not readily available, e.g. in an underground car park or under bridges. Moreover, an accuracy of the provided second data may be increased particularly for high-dynamic driving maneuvers compared to methods that use wheel speed sensors for obtaining a rotational speed of road wheels of the vehicle, which may slip in high-dynamic driving maneuvers, when providing the second data. Moreover, providing such a data processing apparatus has the effect that vehicle motion vector may be estimated in an accurate manner even in high-dynamic driving scenarios, in which road wheels of the vehicle may be subject to slippage, and/or in situations in which a position signal form a global navigation satellite system cannot be obtained or at least cannot be obtained in a timely manner. This may be particularly advantageous for autonomous or at least partly autonomous vehicles, which rely heavily on knowing the vehicle's position relative to objects in their environment, because a human driver is not expected to provide control inputs to the vehicle at all or at least to a reduced extent. An autonomous or at least partly autonomous vehicle's driving maneuvers are more accurate and reliable if the vehicle knows its precise vehicle motion vector within the model of stationary and moving objects in the environment of the vehicle and if the vehicle motion vector has been corrected by angular detection errors of the Doppler sensor system.

According to a fourth aspect, there is provided a computer program comprising instructions which, when the program is executed by a computer, cause the computer to carry out the method of the first aspect and/or to carry out the method of the second aspect. Providing such a computer program has the effect that a position, an orientation, and a speed of the vehicle relative to its environment may be determined from first data without the need for data from a global navigation satellite system that corresponds to data items of the first data. In other words, the provided second data does not need to be corrected by data from a global navigation satellite system. This increases a reliability of the method for calibrating a Doppler sensor system mountable to a vehicle, particularly in areas in which a signal from a global navigation satellite system is not readily available, e.g. in an underground car park or under bridges or in tunnels. Moreover, an accuracy of the provided second data may be increased particularly for high-dynamic driving maneuvers compared to methods that use wheel speed sensors for obtaining a rotational speed of road wheels of the vehicle, which may slip in high-dynamic driving maneuvers, when providing the second data. Moreover, providing such a data processing apparatus has the effect that vehicle motion vector may be estimated in an accurate manner even in high-dynamic driving scenarios, in which road wheels of the vehicle may be subject to slippage, and/or in situations in which a position signal form a global navigation satellite system cannot be obtained or at least cannot be obtained in a timely manner. This may be particularly advantageous for autonomous or at least partly autonomous vehicle, which rely heavily on knowing the vehicle's position relative to objects in their environment, because a human driver is not expected to provide control inputs to the vehicle at all or at least to a reduced extent. An autonomous or at least partly autonomous vehicle's driving maneuvers are more accurate and reliable if the vehicle knows its precise vehicle motion vector within the model of stationary and moving objects in the environment of the vehicle and if the vehicle motion vector has been corrected by angular detection errors of the Doppler sensor system.

According to a fifth aspect, there is provided a computer-readable storage medium comprising instructions which, when executed by a computer, cause the computer to carry out the method of the first aspect and/or to carry out the method of the second aspect. Providing such a computer-readable storage medium has the effect that a position, an orientation, and a speed of the vehicle relative to its environment may be determined from first data without the need for data from a global navigation satellite system that corresponds to data items of the first data. In other words, the provided second data does not need to be corrected by data from a global navigation satellite system. This increases a reliability of the method for calibrating a Doppler sensor system mountable to a vehicle, particularly in areas in which a signal from a global navigation satellite system is not readily available, e.g. in an underground car park or under bridges. Moreover, an accuracy of the provided second data may be increased particularly for high-dynamic driving maneuvers compared to methods that use wheel speed sensors for obtaining a rotational speed of road wheels of the vehicle, which may slip in high-dynamic driving maneuvers, when providing the second data. Moreover, providing such a data processing apparatus has the effect that vehicle motion vector may be estimated in an accurate manner even in high-dynamic driving scenarios, in which road wheels of the vehicle may be subject to slippage, and/or in situations in which a position signal form a global navigation satellite system cannot be obtained or at least cannot be obtained in a timely manner. This may be particularly advantageous for autonomous or at least partly autonomous vehicle, which rely heavily on knowing the vehicle's position relative to objects in their environment, because a human driver is not expected to provide control inputs to the vehicle at all or at least to a reduced extent. An autonomous or at least partly autonomous vehicle's driving maneuvers are more accurate and reliable if the vehicle knows its precise vehicle motion vector within the model of stationary and moving objects in the environment of the vehicle and if the vehicle motion vector has been corrected by angular detection errors of the Doppler sensor system.

According to a sixth aspect, there is provided a Doppler sensor system mountable to a vehicle. The system comprises:
- a plurality of Doppler sensors mountable to the vehicle, and
- a data processing apparatus according to the third aspect,
wherein the plurality of Doppler sensors are communicatively connected to the data processing apparatus.

The communicative connection between the plurality of Doppler sensors and the data processing apparatus has the effect that the data processing apparatus may obtain first data indicative of Doppler sensor detections of an environment of the vehicle. The first data originates from the plurality of Doppler sensors mountable to the vehicle. Thus, the method according to the first aspect and the method according to the second aspect may be carried out using the Doppler sensor system according to the present sixth aspect. In other words, the Doppler sensor system according to the present sixth aspect is calibratable by means of the method of the first aspect. Additionally, a vehicle motion vector of a vehicle to which the Doppler sensor system is mounted may be estimated in a reliable and precise manner.

According to a seventh aspect, there is provided a calibration system for a Doppler sensor system. The calibration system comprises a data processing apparatus according to the third aspect. This has the effect that the method according to the first aspect may be carried out using the calibration system according to the present seventh aspect. In other words, the Doppler sensor system according to the sixth aspect may be calibrated using the calibration system of the present seventh aspect.

It should be noted that the above examples may be combined with each other irrespective of the aspect involved. Accordingly, the methods of the first and second aspect may be combined with structural features of the Doppler sensor system and of the calibration system and, likewise, the Doppler sensor system and the calibration system may be combined with features described above with regard to the methods of the first and second aspect.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows an ego-vehicle comprising a Doppler sensor system according to the present disclosure, wherein a position of a following vehicle is estimated by the Doppler sensor system,
- Figure 2: shows the ego-vehicle of Figure 1 in a more detailed view illustrating that the ego-vehicle further comprises a data processing apparatus according to the present disclosure and a calibration system for a Doppler sensor system according to the present disclosure,
- Figure 3: shows a Doppler sensor of the Doppler sensor system of the ego-vehicle of Figure 2 behind an exterior hull of the ego-vehicle,
- Figure 4: shows a diagram of Doppler sensor detections of the Doppler sensor system of the ego-vehicle of Figures 1 and 2, wherein the x-axis of the diagram shows azimuth angles and the y-axis of the diagram shows longitudinal speeds of detected objects relative to the ego-vehicle,
- Figure 5: shows a diagram of Doppler sensor detections of a single Doppler sensor, wherein the x-axis of the diagram shows azimuth angles and the y-axis of the diagram shows a radial velocities of detected objects relative to the ego-vehicle,
- Figure 6: shows a comparison of a speed of the ego-vehicle during a drive sequence obtained by an internal measurement unit of the vehicle, by a satellite navigation system and by a method according to the present disclosure for estimating a vehicle motion vector of a vehicle while the vehicle is moving,
- Figure 7: illustrates a first embodiment of the method according to the present disclosure for estimating a vehicle motion vector of a vehicle while the vehicle is moving, wherein the first method comprises a method according to the present disclosure for calibrating a Doppler sensor system mountable to a vehicle,
- Figure 8: illustrates a second embodiment of the method according to the present disclosure for estimating a vehicle motion vector of a vehicle while the vehicle is moving, wherein the method comprises the method according to the present disclosure for calibrating a Doppler sensor system mountable to a vehicle, and
- Figure 9: illustrates a third embodiment of the method according to the present disclosure for estimating a vehicle motion vector of a vehicle while the vehicle is moving, wherein the method comprises the method according to the present disclosure for calibrating a Doppler sensor system mountable to a vehicle.

### DETAILED DESCRIPTION

The Figures are merely schematic representations and serve only to illustrate examples of the disclosure. Identical or equivalent elements are in principle provided with the same reference signs.

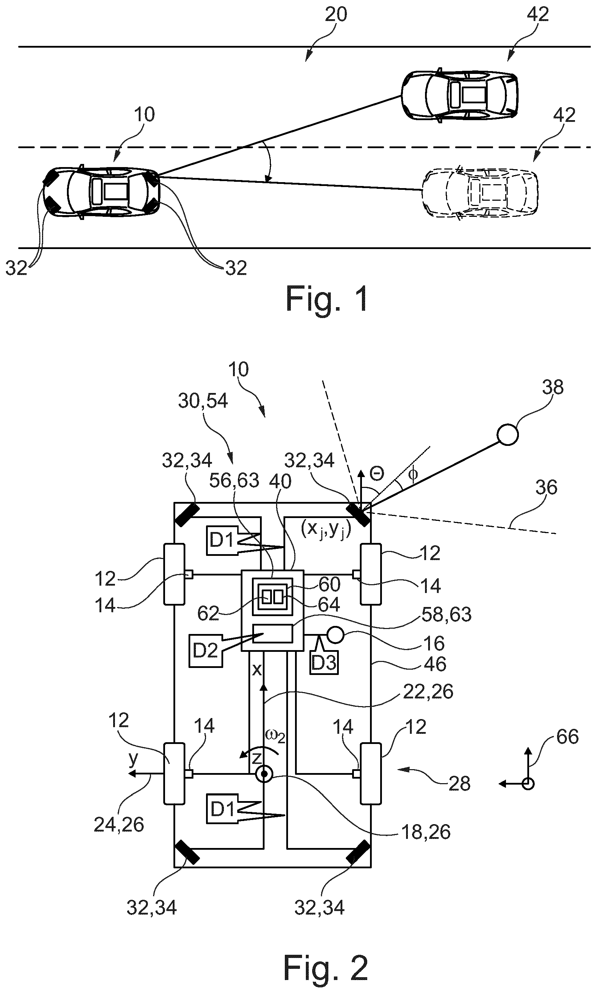

Figure 1 shows an ego-vehicle 10.

The ego-vehicle 10 comprises four road wheels 12 (see Figure 2). A wheel speed sensor 14 is mounted to each road wheel 12 of the ego-vehicle in order to capture a rotational speed of the associated road wheel 12.

The ego-vehicle 10 further comprises a yaw rate sensor. In the present example, the yaw rate sensor is a gyroscope 16. The gyroscope 16 is capable of determining a rotational speed of the ego-vehicle around a height axis of the ego-vehicle 10, i.e. a yaw rate of the ego-vehicle 10. The height axis 18 of the ego-vehicle 10 is defined as an axis perpendicular to a surface of a road 20 on which the ego-vehicle 10 is traveling.

Besides the height axis 18, the ego-vehicle 10 comprises a longitudinal axis 22 and a lateral axis 24. The longitudinal axis 22 is oriented in parallel to a standard forward driving direction of the ego-vehicle 10. The lateral axis 24 is perpendicular to the height axis 18 and perpendicular to the longitudinal axis 22. The height axis 18, the longitudinal axis 22 and the lateral axis 24 form an ego-vehicle coordinate system 26 that is fixed to the ego-vehicle 10. More precisely, in the present example, an origin of the ego-vehicle coordinate system is located on a rear axle 28 of the ego-vehicle 10.

The ego-vehicle 10 further comprises a Doppler sensor system 30 mounted to the ego-vehicle 10.

The Doppler sensor system 30 comprises a plurality of Doppler sensors 32. In the present example, four radar sensors 34 are used as Doppler sensors 32. The four radar sensors 34 are arranged in each corner of the ego-vehicle 10. Each radar sensor 34 comprises a field of view 36 within which it may detect objects 38 exterior to the ego-vehicle 10, i.e. in an environment of the ego-vehicle 10.

In Figure 2 only one object 38 is illustrated. This object 38 is representative of a plurality of objects 38 that may be present in the environment of the ego-vehicle 10.

The Doppler sensor system 30 further comprises a data processing apparatus 40.

The four Doppler sensors 32 are communicatively connected to the data processing apparatus 40 such that the data processing apparatus 40 may receive first data D1 indicative of Doppler sensor detections of an environment of the ego-vehicle 10.

The data processing apparatus 40 is also communicatively connected to each wheel speed sensor 14 and to the gyroscope 16 of the ego-vehicle 10. Thus, the data processing apparatus 40 is configured to receive third data D3 indicative of the yaw rate of the ego-vehicle 10 from the gyroscope 16.

By means of the Doppler sensor system 30, the ego-vehicle 10 is able to detect objects 38 in an environment of the ego-vehicle 10. In Figure 1, it is shown that the ego-vehicle 10 detects a following vehicle 42 by means of the Doppler sensor system 30. The ego-vehicle 10 is driving on a left lane of the road 20. The following vehicle 42 is driving on a right lane of the road 20. Thus, a Doppler sensor 32 mounted to a rear right corner of the ego-vehicle 10 detects the following vehicle 42 within its field of view 36.

Figure 1 further shows another illustration of the following vehicle 42 in dashed lines. The other illustration of the following vehicle 42 in dashed lines is, like the ego-vehicle, located on the left lane of the road 20. The other illustration of the following vehicle 42 in dashed lines represents a location at which the Doppler sensor system 30 of the ego-vehicle 10 may locate the following vehicle 42 if the first data D1 from the Doppler sensor 32 that detects the following vehicle 42, here the radar sensor 34 in the rear right corner of the ego-vehicle 10, comprises an angular detection error.

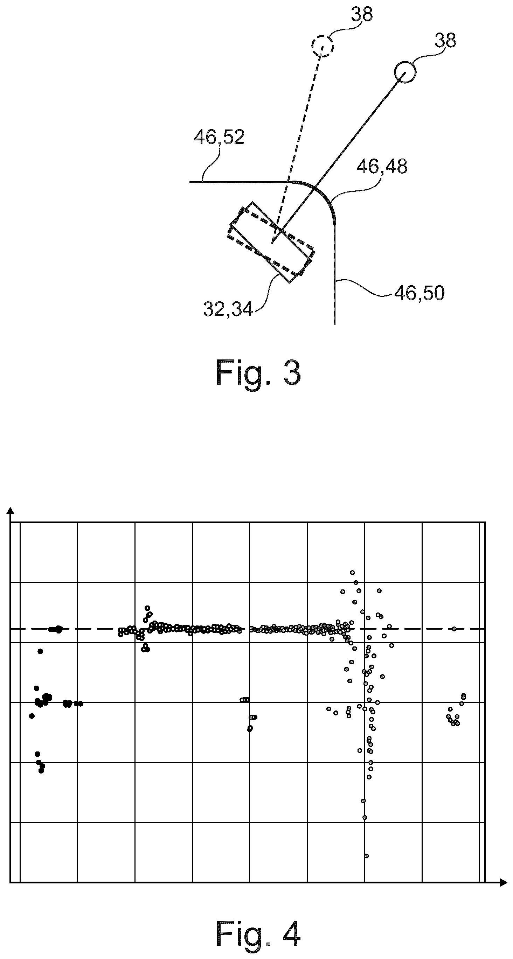

As shown in Figure 3, the angular detection error may, at least partly, be due to a misalignment, e.g. an angular misalignment, of the Doppler sensor 32 with respect to its desired mounting position and orientation. If the Doppler sensor 32 is mounted to the ego-vehicle 10 in an actual orientation as shown by the solid lines in Figure 3 that differs from a desired orientation as shown by the dashed lines in Figure 3, which is inclined relative to the actual orientation, an object 38 that is located on a lane adjacent to the ego-vehicle's lane (see solid circle) may be perceived as being located at a different position - in this example, in the same lane as the ego-vehicle 10 - by the Doppler sensor system 30 (see dashed circle). The angular detection error may be referred to as a global detection error of the Doppler sensor 32 of the Doppler sensor system 30. This is because an error due to a geometric misalignment of the Doppler sensor 32 applies to a whole field of view 36 of the Doppler sensor 32 of the Doppler sensor system 30.

Furthermore, as also shown in Figure 3, a Doppler sensor 32 of the Doppler sensor system 30 is mounted to the ego-vehicle 10 behind an exterior hull 46 of the ego-vehicle 10. The exterior hull 46 of the ego-vehicle 10 may comprise different materials, different shapes or different wall thicknesses and thus different Doppler signal transmission properties. This is indicated in Figure 3 by a thickened corner portion 48 compared to a longitudinal portion 50 and a transverse portion 52 of the exterior hull 46 of the ego-vehicle 10. Moreover, portions of the exterior hull 46 of the ego-vehicle 10, through which signals emitted from the Doppler sensor 32 and signals reflected from an object 38 back to the emitting Doppler sensor 32 need to propagate, are arranged at different angles relative to the Doppler sensor 32. Different properties or orientations of the exterior hull 46 of the ego-vehicle 10, through which Doppler sensor signals need to propagate, may affect a detection result of the Doppler sensor 32. This is due to different refractive angles of Doppler sensor signals at differently oriented portions of the exterior hull 46 of the ego-vehicle 10 and/or at portions of the exterior hull 46 of the ego-vehicle 10 that comprise different signal propagation properties. Such an error may be referred to as a local detection error of the Doppler sensor 32 of the Doppler sensor system 30. This is because an error due to different signal propagation properties of the exterior hull 46 of the ego-vehicle within the field of view 36 of the Doppler sensor 32 may vary over the field of view 36 of the Doppler sensor 32 and, thus, result in a locally distorted perception of the environment of the ego-vehicle 10.

In order to account for a global detection error and for a local detection error, the ego-vehicle 10 further comprises a calibration system 54 for the Doppler sensor system 30. The calibration system 54 comprises the data processing apparatus 40. In the present example, the data processing apparatus 40 shown in Figure 2 forms part of both the Doppler sensor system 30 mounted to the ego-vehicle 10 and of the calibration system 54 for the Doppler sensor system 30 mounted to the ego-vehicle 10.

The data processing apparatus 40 comprises a data storage unit 56 and a data processing unit 58. The data storage unit 56 comprises a computer-readable storage medium 60. On the computer-readable storage medium 60, there is provided a computer program 62 and a trainable data model 64. In the present example, the trainable data model 64 is an artificial neural network.

The computer program 62 and, thus, also the computer-readable storage medium 60, comprise instructions which, when executed by the data processing unit 58, or, more generally speaking, a computer, cause the computer or the data processing unit 58 to carry out a method for estimating a vehicle motion vector of a vehicle while the vehicle is moving. This method may be referred to as a first method. In the present example, the first method estimates the vehicle motion vector of the ego-vehicle 10 while the ego-vehicle 10 is moving. The vehicle motion vector describes a movement of the ego-vehicle 10 within a global coordinate system 66 that is stationary. In other words, the vehicle motion vector describes a position, orientation and speed of the ego-vehicle 10 within the global coordinate system 66.

Moreover, the computer program 62 and, thus, also the computer-readable storage medium 60, comprise instructions which, when executed by the data processing unit 58, or, more generally speaking, a computer, cause the computer or the data processing unit 58 to carry out a method for calibrating a Doppler sensor system 30 mountable to a vehicle. This method may be referred to as a second method. In the present example, the second method calibrates the Doppler sensor system 30 of the ego-vehicle 10. The second method forms part of the first method as will be explained in connection with the following three embodiments.

Thus, it may be said that the data storage unit 56 and the data processing unit 58 form means 63 for carrying out the first method and means for carrying out the second method.

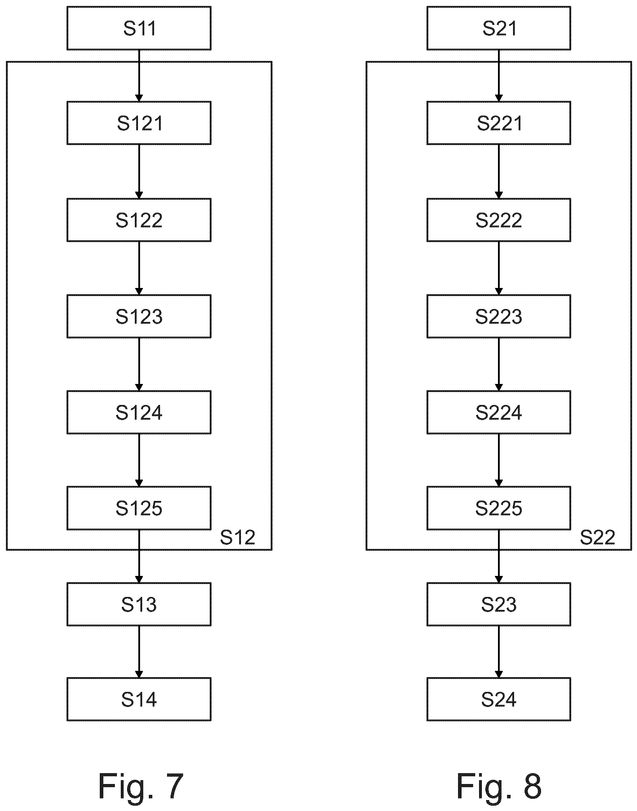

In the following, the first embodiment will be explained. Steps of the first embodiment of the first method for estimating the vehicle motion vector of the ego-vehicle 10 while the ego-vehicle 10 is moving are illustrated in Figure 7. The first embodiment may be executed if the yaw rate of the vehicle as obtained from by the gyroscope 16 is at least temporarily determined to be zero or if an absolute value of the yaw rate is at least temporarily below a yaw rate threshold.

In a first step S11 of the first embodiment, the first method comprises obtaining first data D1 indicative of Doppler sensor detections of the environment of the moving ego-vehicle 10. In the present example, the first data D1 originates from the four radar sensors 34 of the Doppler sensor system 30 mounted to the ego-vehicle 10 in each corner of the ego-vehicle 10. The first data D1 comprises a plurality of detections of Doppler velocities from objects 38 in the field of view 36 of the four radar sensors 34. A Doppler velocity is understood as a velocity of an object 38 detected by a Doppler sensor 32 along a direction of a direct connection between that object 38 and the Doppler sensor 32 that has detected the object 38. The Doppler velocity may also be referred to as a radial velocity of the object 38 with respect to the Doppler sensor 32 that has detected the object 38. A Doppler velocity of an object 38 that is detected by a Doppler sensor 32 and not further processed by the following method steps may be referred to as a measured Doppler velocity **v**ₘ.

In a second step S12 of the first embodiment, the first method comprises calibrating the Doppler sensor system 30 mounted to the ego-vehicle 10. Calibrating the Doppler sensor system 30 mounted to the ego-vehicle is achieved by executing the second method. The second method of the first embodiment is only executed if the yaw rate of the ego-vehicle 10 as obtained from the gyroscope 16 is determined to be zero or if an absolute value of the yaw rate is below the yaw rate threshold.

The first step S121 of the second method of the first embodiment comprises distinguishing stationary objects 38 from moving objects 38 within the first data D1. To this end, a vehicle motion vector **v**ₚ is defined. The vehicle motion vector **v**ₚ is a vector of motion comprising a longitudinal speed, a lateral speed as well as the yaw rate of the vehicle expressed with respect to the global coordinate system 66. A transformation matrix **M** is determined that establishes a relation between all measured Doppler velocities **v**ₘ of the Doppler sensor system 30 arranged in a vector **V**ₘ, the vehicle motion vector **v**ₚ and random data items, i.e. random samples, of a standard distribution N. The standard distribution has the value zero as a mean value and a variance of σ(**v**ₘ)²: ${V}_{m} = {Mv}_{p} + N \left(0, σ{\left({v}_{m}\right)}^{2}\right)$ (1)

The transformation matrix M is based on an actual, i.e. a true, azimuth angle ϕ and on an actual, i.e. a true, elevation angle Θ of each Doppler sensor detection. The azimuth angle ϕ is an angle of an object 38 relative to a middle axis Doppler sensor 32 in a plane that comprises the longitudinal axis 22 and the lateral axis 24 of the ego-vehicle 10. The elevation angle Θ is an angle of an object 38 relative to the height axis 18 in a plane that is perpendicular to the plane that comprises the longitudinal axis 22 and the lateral axis 24 of the ego-vehicle 10.

Since the actual azimuth angle ϕ and the actual elevation angle Θ are unknown, a measured transformation matrix **M**ₘ is determined that is based on a measured azimuth angle ϕ and on a measured elevation angle Θ of each Doppler sensor detection. The actual azimuth ϕ or elevation angle Θ is the measured azimuth or elevation angle minus an angular detection error for the azimuth angle ϕ and for the elevation angle Θ, respectively. The angular detection error for the azimuth angle ϕ and for the elevation angle Θ are to be determined within the scope of the present second method.

The measured transformation matrix **M**ₘ establishes a relation between so called estimated Doppler velocities **v**ₑ of the Doppler sensor system that are arranged in a matrix **V**ₑ, the vehicle motion vector **v**ₚ and the normal distribution N: ${V}_{e} = {M}_{m} {v}_{p} + N \left(0, σ{\left({v}_{m}\right)}^{2}\right)$ (2)

For each point in the field of view 36 of the Doppler sensors 32 of the Doppler sensor system 30, an absolute difference between the measured Doppler velocity **v**ₘ and the estimated Doppler velocity **v**ₑ is determined. This absolute difference may be referred to as a residual between the measured Doppler velocity **v**ₘ and the estimated Doppler velocity **vₑ.** If the residual is below a predetermined residual threshold, the corresponding detection in the field of view 36 of the corresponding Doppler sensor 32 is considered to be a stationary object 38. If the residual is above or equal to the predetermined residual threshold, the corresponding detection in the field of view 36 of the corresponding Doppler sensor 32 is considered to be a non-stationary, i.e. a moving, object 38.

The estimation of stationary objects 38 is even more reliable if an iterative Random Sample Consensus algorithm is used on randomly selected subsets of the first data D1. The iterative Random Sample Consensus algorithm iteratively excludes non-stationary objects 38 through repeated iterations of determining the absolute difference between the measured Doppler velocity **v**ₘ and the estimated Doppler velocity **v**ₑ on the randomly selected subsets of the first data D1.

To explain this more graphically, Figure 4 illustrates a diagram of example Doppler sensor detections of objects 38 in the surroundings of the ego-vehicle 10 made by the Doppler sensor system 30. It is observable that a plurality of Doppler sensor detections lie on a dominant horizontal line, which is drawn-in as a dashed line and which is created by dominant stationary structures in the surroundings of the ego-vehicle 10. An intersection point of the dashed line with the y-axis of the diagram represents the longitudinal speed of the ego-vehicle 10.

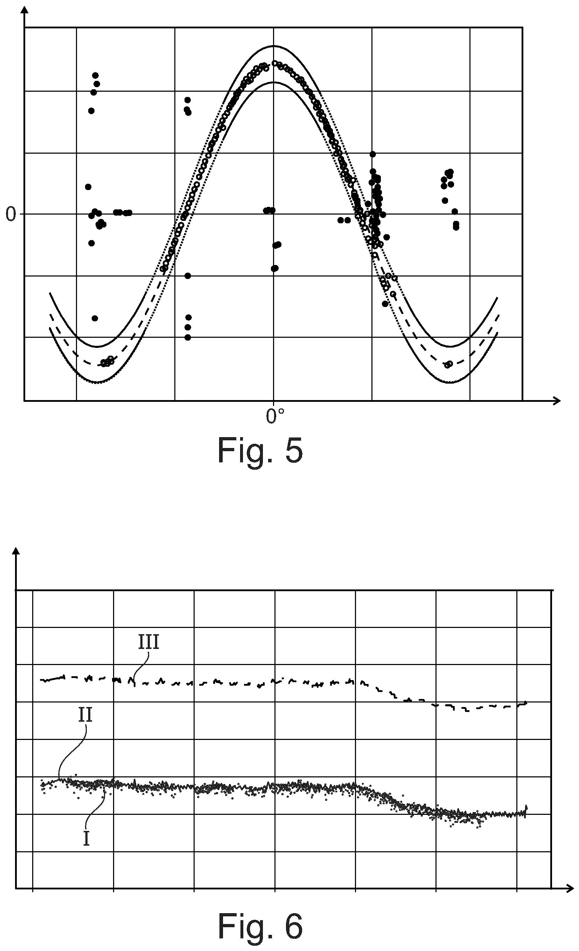

Figure 5 shows a profile of radial velocities of detected objects 38, i.e. measured Doppler velocities **v**ₘ, over the azimuth angle ϕ of a single Doppler sensor 32. The estimated Doppler velocities **v**ₑ are drawn-in as a dashed line. At an azimuth angle of 0°, the estimated Doppler velocity reaches a maximum. At an azimuth angle of 90°, the estimated Doppler velocity is zero. A band, whose boundaries are located above and below the estimated Doppler velocity by the predetermined residual threshold, flanks the estimated Doppler velocities **v**ₑ. All detections within the band are designated stationary objects 38 (inliers). All detections outside the band are designated non-stationary objects (outliers).

Since a plurality of Doppler sensors 32, in the present example the four radar sensors 34, are used in the Doppler sensor system 30, the vehicle motion vector **v**ₚ of the ego-vehicle 10 can be estimated from stationary objects 38 detected by the Doppler sensors 32. Thus, the second step S122 of the of the second method according to the first embodiment comprises determining the vehicle motion vector **v**ₚ based on stationary objects 38 identified in the first data D1. To this end, an optimization problem is formulated that minimized the absolute difference between the measured Doppler velocity **v**ₘ and the estimated Doppler velocity **v**ₑ over all stationary points in the field of view 36 of the Doppler sensors 32 of the Doppler sensor system 30. In other words, the second step S122 seeks to determine a vehicle motion vector **v**ₚ that aligns best with the determined first data D1. The optimization problem is formulated as ${min}_{{v}_{p}} {\left‖W\left({M}_{m}{v}_{p}-{V}_{e}\right)\right‖}_{2}^{2}$ (3), wherein W is a diagonal weighing matrix with each diagonal element w_{i,j} representing a signal-to-noise ratio of an i-th stationary detection, i.e. a point, in the field of view 36 of the j-th Doppler sensor 32. In simplified words, an objective of the formulated optimization problem is to find a vehicle motion vector **v**ₚ that minimizes, in the Euclidean norm, a sum of squared residuals that are weighted by the signal-to-noise ratio of each Doppler sensor detection. The formulated optimization problem is solved for **v**ₚ by an Orthogonal Distance Regression, by a method of least squares or by a similar optimization method.

A subsequent third step S123 of the second method according to the first embodiment comprises using the vehicle motion vector **v**ₚ determined in step S122 in order to refine the identification of stationary and non-stationary objects 38 in the first data D1 from step S121. This is achieved by employing the vehicle motion vector **v**ₚ obtained in the previous step S122 in equation (2) in order to obtain new values for the estimated Doppler velocities v_{e,new}, which are arranged in the matrix **V**_{e,new}.

For each detection in the field of view 36 of the Doppler sensors 32 of the Doppler sensor system 30, an absolute difference between the measured Doppler velocity **v**ₘ and the new estimated Doppler velocity **v**_{e,new} is determined. This absolute difference may be referred to as a new residual between the measured Doppler velocity **v**ₘ and the estimated Doppler velocity **v**_{e,new}. If the new residual is below a predetermined new residual threshold, the corresponding detection in the field of view 36 of the corresponding Doppler sensor 32 of the Doppler sensor system 30 is considered to be a stationary object 38. If the residual is above or equal to the predetermined new residual threshold, the corresponding detection in the field of view 36 of the corresponding Doppler sensor 32 of the Doppler sensor system 30 is considered to be a moving object 38. It is noted that the predetermined new residual threshold is inferior to, i.e. lower than the predetermined residual threshold from step S121. Due to this, an accuracy in determining stationary objects 38 from the Doppler sensor detections is increased.

In a fourth step S124 of the second method according to the first embodiment, angle errors *δϕ* for an azimuth angle and *δϕ* for an elevation angle of each Doppler sensor detection is determined. In order to do so, a cost function Jᵢ is defined as the squared difference between the measured Doppler velocity *v_{mᵢ}* and the new estimated Doppler velocity *v_{e,newᵢ}* for each stationary detection i from step S123. Non-stationary detections as identified in step S123 are not considered in the present step S124. The cost function Jᵢ is formulated as being dependent on an error in the azimuth angle *δϕᵢ* and on an error in the elevation angle *δθᵢ* for each Doppler sensor detection i. The cost function Jᵢ is to be minimized and solved for *δϕᵢ* and *δθᵢ*: ${min}_{{δϕ}_{i} , {δθ}_{i}} {J}_{i} \left({δϕ}_{i}, {δθ}_{i}\right) , wherein {J}_{i} \left({δϕ}_{i}, {δθ}_{i}\right) = {\left({v}_{e , {new}_{i}}-{v}_{{m}_{i}}\right)}^{2}$ (4)

Since in the first embodiment, the ego-vehicle 10 is driving on a straight line, i.e. the yaw rate as obtained from the gyroscope 16 is zero or at least below the yaw rate threshold, a yaw rate and lateral speed of the ego-vehicle 10 of zero is used to simplify the minimization problem. An Orthogonal Distance Regression is employed to solve the minimization of the cost function J for *δϕᵢ* and *δθᵢ. δϕᵢ* and *δθᵢ* each comprise a global angle error and a local angle error.

It is noted that first data D1 from Doppler sensor detections of one or multiple points in time may be used for the minimization of the cost function Jᵢ. If first data D1 from Doppler sensor detections of only one point in time is used, a solution of the minimization of the cost function Jᵢ is stabilized by adding a regularization term to the cost function Jᵢ: ${min}_{{δϕ}_{i} , {δθ}_{i}} {J}_{i} \left({δϕ}_{i}, {δθ}_{i}\right) + {λ}_{ϕ} {\left‖{δϕ}_{i}\right‖}^{2} + {λ}_{θ} {\left‖{δθ}_{i}\right‖}^{2}$ (5) *λ_{ϕ}* and *λ_{θ}* are regularization coefficients that penalize large values of *δϕᵢ* and *δθᵢ,* respectively. Adding the regularization term helps mitigating effects of overfitting and ensures a robust estimation of angle errors *δϕᵢ* and *δθᵢ.*

After having solved the minimization of the cost function Jᵢ for the angle errors *δϕᵢ* and *δθᵢ,* the global angle error in azimuth angle ϕ of a specific Doppler sensor 32 is obtained by a weighted average of *δϕᵢ* over the field of view 36 of the specific Doppler sensor 32. Likewise, the global angle error in elevation angle Θ of a specific Doppler sensor is obtained by a weighted average of *δθᵢ* over the field of view 36 of the specific Doppler sensor 32. The local angle error in azimuth angle ϕ and in elevation angle Θ is defined as the remaining error at each point in the field of view 36 of a Doppler sensor 32 that cannot be explained by the global angle error in azimuth angle ϕ and by the global angle error in elevation angle Θ, respectively. Weights of the weighted averages are defined based on a signal-to-noise ratio of each detection over the field of view 36 of the specific Doppler sensor 32.

In a fifth step S125 of the second method according to the first embodiment, an iterative Random Search Algorithm is applied to achieve a vehicle motion vector of highest accuracy v_{p,best}. The Random Search Algorithm minimizes a discrepancy between the estimated Doppler velocities **V**ₑ and the measured Doppler velocities **V**ₘ. This is achieved by estimating global angle errors and local angle errors in each step of the iteration. The algorithm is initialized by azimuth angles ϕ and elevation angles Θ of the first data D1, i.e. of the Doppler sensor detections. The estimates for the global angle errors and for the local angle errors are subtracted from the results for the azimuth angles ϕ and for the elevation angles Θ of a previous iteration step. Since the vehicle motion vector **v**ₚ depends on the true azimuth angles ϕ and on the true elevation angles Θ of the Doppler sensor detections, the estimate for the vehicle motion vector **v**ₚ gradually becomes more accurate as the Random Search Algorithm progresses through its iterations.

It is noted that the Random Search Algorithm may comprise an iterative Gradient Descent Optimization, such as Stochastic Gradient Descent using adaptive learning rates, in order to iteratively approximate the estimated Doppler velocity **V**ₑ to the measured Doppler velocity **V**ₘ.

Once the ego-vehicle 10 stops driving along a straight line, i.e. once the yaw rate of the ego-vehicle 10 as provided by the gyroscope 16 is not zero or if the absolute value of the yaw rate is at least not below the yaw rate threshold any more, the second method is paused. In simplified words, the second method is paused if the ego-vehicle 10 is driving a curve. The latest results of the second method for global angle errors and local angle errors in azimuth angles ϕ as well as in elevation angles Θ are taken as calibration factors, i.e. correction factors, for the first data D1 indicative of Doppler sensor detections made while the ego-vehicle 10 is driving at a yaw rate unequal to zero or at an absolute value of the yaw rate above the yaw rate threshold. Thus, when the second method is paused, second data D2 indicative of the angular detection errors in azimuth angle ϕ and in elevation angle Θ are provided as a result of the second method. Additionally or alternatively, when the second method is paused, second data D2 indicative of the vehicle motion vector **v**_{p,best} is provided as a result of the second method.

In a third step S13 of the first method according to the first embodiment, the corrected first data D1 is used to determine a model of stationary and moving objects 38 within the environment of the ego-vehicle 10. To this end, the equations (1) and (2) from the first step of the second method are applied. However, as measured Doppler velocities **V**ₘ, the first data D1 obtained while the ego-vehicle is driving at a yaw rate unequal to zero or at an absolute value of the yaw rate above the yaw rate threshold is corrected by the calibration factors for global angle errors and local angle errors in azimuth angle ϕ as well as in elevation angle Θ.

In a fourth step S14 of the first method according to the first embodiment, the vehicle motion vector **v**ₚ of the ego-vehicle 10 while driving at a yaw rate unequal to zero or at an absolute value of the yaw rate above the yaw rate threshold is obtained from the model of stationary and moving objects 38 within the environment of the ego-vehicle 10. To this end, equation (3) from the second method is used.

Thus, in the first embodiment and in simplified words, the Doppler sensor system 30 is calibrated by the second method as long as the ego-vehicle 10 is driving along a substantially straight line. The latest results of the second method for global angle errors and local angle errors in azimuth angles ϕ as well as in elevation angles Θ are taken as calibration factors, i.e. correction factors, for the first data D1 indicative of Doppler sensor detections made while the vehicle is driving a curve. Thus, the vehicle motion vector **v**ₚ of the ego-vehicle 10 is obtained at high accuracy without relying on a global navigation satellite system.

It is noted that during the use of the ego-vehicle 10, the second method, i.e. the calibration of the Doppler sensor system 30, may be executed periodically, e.g. after the lapse of a predefined time window. After each execution of the second method, the latest resulting correction factors are used in the first method.

Figure 6 shows a comparison of speeds of the ego-vehicle 10 as determined by the present first embodiment I to speeds of the ego-vehicle 10 as determined during a same drive sequence by a global navigation satellite system II and by an internal measurement unit III of the ego-vehicle 10. The internal measurement unit comprises the gyroscope 16 and the wheel speed sensors 14. It is observable that the speed of the ego-vehicle 10 obtained by the first embodiment closely matches the vehicle speed obtained by the global navigation satellite system, which is considered a true speed of the ego-vehicle 10. By contrast, the vehicle speed obtained from the internal measurement unit of the ego-vehicle 10 does not match the vehicle speed obtained by the global navigation satellite system. Thus, the accuracy of the first embodiment surpasses an accuracy of the internal measurement unit of the ego-vehicle 10.

In the following, the second embodiment will be explained. Steps of the second embodiment of the first method for estimating the vehicle motion vector of the ego-vehicle 10 while the ego-vehicle is moving are illustrated in Figure 8. Only the differences with respect to the first embodiment will be explained. The second embodiment may be executed at any yaw rate of the ego-vehicle 10 as obtained from the gyroscope 16.

The first step S21 of the first method according to the second embodiment is identical to the first step S11 of the first method according to the first embodiment.

The second step S22 of the first method according to the second embodiment comprises executing the second method according to the second embodiment.

The first step S221 of the second method according to the second embodiment is identical to the first step S121 of the second method according to the first embodiment with the exception that any yaw rate of the ego-vehicle is allowed. The yaw rate is received from the gyroscope 16.

The second step S222 of the second method according to the second embodiment is identical to the second step S122 of the second method according to the first embodiment with the exception that in the optimization problem in equation (3), a vehicle motion vector **v**ₚ based on the yaw rate as obtained by the gyroscope 16 is used as an initial guess. The formulated optimization problem (3) is solved for **v**ₚ by an Orthogonal Distance Regression or by the least squares method.

Like the third step S123 of the second method according to the first embodiment, also the third step S223 of the second method according to the second embodiment comprises using the vehicle motion vector **v**ₚ determined in the previous step, here in step S222, in order to refine the identification of stationary and non-stationary objects 38 in the first data D1 from step S221. The step S223 of the second method according to the second embodiment is analogous to step S123 the second method according to the first embodiment. However, additionally, a confidence level is determined for each Doppler sensor detection that, which comprises measured Doppler velocities **V**ₘ, based on a deviation of the measured Doppler velocities **V**ₘ from the estimated Doppler velocities **V**ₑ.

In a fourth step S224 of the second method according to the second embodiment, the yaw rate of the ego-vehicle 10 as obtained from the gyroscope 16 and the stationary objects 38 determined in step S223 are used to estimate a direction of movement of each Doppler sensor 32 mounted to the ego-vehicle 10. Non-stationary objects 38 from step S223 are excluded in step S224. To this end, the ego-vehicle 10, to which the Doppler sensors 32 are mounted, is understood as a rigid body. Thus, rigid body kinematics are applied to express a motion of each Doppler sensor 32 mounted to the ego-vehicle in the global coordinate system 66. In order to do so, it is assumed that there is no lateral motion of the ego-vehicle 10 at its rear axle. In other words, it is assumed that the ego-vehicle coordinate system 26 does not move along a direction parallel to the rear axle of the ego-vehicle 10. Thus, a speed vector in the global coordinate system is determined for each Doppler sensor 32 mounted to the ego-vehicle 10 based on the yaw rate of the ego-vehicle 10 obtained from the gyroscope 16.

By comparing the speed vector calculated for each Doppler sensor 32 mounted to the ego-vehicle 10 with the new values for the estimated Doppler velocities **v**_{e,new}, which are arranged in the matrix **V**_{e,new} and which were obtained in step S223 in a manner analogous to step S123 of the first embodiment, the global angle error in azimuth angle ϕ for each Doppler sensor 32 is estimated.

In a fifth step S225 of the second method according to the second embodiment, first data D1 indicative of Doppler sensor detections of an environment of the ego-vehicle from step S21 is corrected by the estimated global angle error in azimuth angle ϕ for each Doppler sensor 32. The corrected first data D1 is then used to provide a more accurate estimate of the vehicle motion vector **v**ₚ using an Orthogonal Distance Regression or a similar method.

The local angle error in azimuth angle ϕ and in elevation angle Θ is determined based on the first data D1 corrected by the determined global angle error in azimuth angle ϕ for each Doppler sensor 32. The determination of the local angle errors is achieved using a Random Search Algorithm similar to step S125 of the second method according to the first embodiment.

Finally, the global angle error in azimuth angle ϕ is re-estimated and the global angle error in elevation angle Θ is estimated for the first time. The global angle error in azimuth angle ϕ of a specific Doppler sensor 32 is obtained by a weighted average of *δϕᵢ* over the field of view 36 of the specific Doppler sensor 32. Likewise, the global angle error in elevation angle Θ of a specific Doppler sensor 32 is obtained by a weighted average of *δθᵢ* over the field of view 36 of the specific Doppler sensor 32. The local angle error in azimuth angle ϕ and in elevation angle Θ is determined as the remaining error at each point in the field of view 36 of a Doppler sensor 32 that cannot be explained by the global angle error in azimuth angle ϕ and by the global angle error in elevation angle Θ, respectively.

The results of the second method for global angle errors and local angle errors in azimuth angles ϕ as well as in elevation angles Θ are taken as calibration or correction factors for the first data D1 indicative of Doppler sensor detections. Thus, second data D2 indicative of the angular detection errors in azimuth angle ϕ and in elevation angle Θ are provided as a result of the second method according to the second embodiment. Additionally or alternatively, second data D2 indicative of the vehicle motion vector **v**_{p,best} is provided as a result of the second method according to the second embodiment.

In a third step S23 of the first method according to the second embodiment, the corrected first data D1 is used to determine a model of stationary and moving objects 38 within the environment of the ego-vehicle 10. This step is identical to step S13 of the first method according to the first embodiment, i.e. uses equations (1) and (2). As measured Doppler velocities **V**ₘ, to be used in these equations, the first data D1 is corrected by the calibration factors for global angle errors and local angle errors in azimuth angle ϕ as well as in elevation angle Θ.

In a fourth step S24 of the first method according to the second embodiment, the vehicle motion vector **v**ₚ of the ego-vehicle 10 is obtained from the model of stationary and moving objects 38 within the environment of the ego-vehicle 10. To this end, equation (3) from the first method is used. Thus, the fourth step S24 of the first method according to the second embodiment is identical to the fourth step S14 of the first method according to the first embodiment.

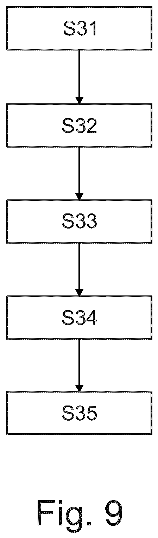

In the following, the third embodiment will be explained. Steps of the third embodiment of the first method for estimating the vehicle motion vector of the ego-vehicle 10 while the ego-vehicle 10 is moving are illustrated in Figure 9. Only the differences with respect to the first embodiment and with respect to the second embodiment will be explained. Like the second embodiment, the third embodiment may be executed at any yaw rate of the ego-vehicle 10 as obtained from by the gyroscope 16.

In a first step S31 of the first method according to the third embodiment, the trainable data model 64 is trained using first data D1 indicative of Doppler sensor detections of an environment of the ego-vehicle 10. The Doppler sensor detections originate from the four radar sensors 34 mounted to the ego-vehicle 10 while the ego-vehicle 10 is driving training drive sequence. During the training drive sequence, odometry data of the ego-vehicle 10 is obtained from the wheel speed sensors 14, the gyroscope 16 and/or from a global navigation satellite system. Thus, the vehicle motion vector of the ego-vehicle 10 during the training drive sequence is determined based on rotational speeds of the road wheels 12 of the ego-vehicle 10, based on the yaw rate of the ego-vehicle and/or based on global position signals from the global navigation satellite system.

The vehicle motion vector obtained in this manner is used as ground truth for training the trainable data model 64. The data model 64 is configured to receive the first data D1 as an input. The data model 64 is further configured to provide the vehicle motion vector as well as global angle errors and local angle errors in azimuth angle ϕ and in elevation angle Θ for each Doppler sensor 32 as an output. The data model 64 is trained by minimizing a difference between a prediction of the trainable data model 64 on the vehicle motion vector and the vehicle motion vector determined from the wheel speed sensors 14, the gyroscope 16 and/or from the global navigation satellite system. The prediction of the trainable data model 64 is made using the first data D1 obtained during the training drive sequence as an input.

Once the trainable data model 64 is trained, first data D1 indicative of Doppler sensor detections of an environment of the ego-vehicle 10 are obtained during a testing drive sequence of the ego-vehicle in a second step S32 of the first method according to the third embodiment. This step is identical to the first step S11 of the first method according to the first embodiment and to the first step S21 of the first method according to the second embodiment.

The third step S33 of the first method according to the third embodiment comprises executing the second method according to the third embodiment.

The second method according to the third embodiment comprises providing the first data D1 obtained during the testing drive sequence as input data to the trained data model 64. The trained data model 64 provides the vehicle motion vector as well as the angular detection errors in azimuth angle ϕ and in elevation angle Θ during the testing drive sequence as an output, which may be referred to as second data D2.

In a fourth step S34 of the first method according to the third embodiment, a model of stationary and moving objects 38 based on the first data D1 obtained during the testing drive cycle is obtained based on the vehicle motion vector and based the angular detection errors as correction factors. This step is identical to the third step S23 of the first method according to the second embodiment.

In a fifth step S35 of the first method according to the third embodiment, the vehicle motion vector **v**ₚ of the ego-vehicle 10 is obtained from the model of stationary and moving objects 38 within the environment of the ego-vehicle 10. Thus, the fifth step S35 of the first method according to the third embodiment is identical to the fourth step S14 of the first method according to the first embodiment or to the fourth step S24 of the first method according to the second embodiment.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: ego-vehicle
- 12: road wheel
- 14: wheel speed sensor
- 16: gyroscope
- 18: height axis
- 20: road
- 22: longitudinal axis
- 24: lateral axis
- 26: ego-vehicle coordinate system
- 28: rear axle
- 30: Doppler sensor system
- 32: Doppler sensor
- 34: radar sensor
- 36: field of view
- 38: object
- 40: data processing apparatus
- 42: following vehicle
- 46: exterior hull
- 48: corner portion
- 50: longitudinal portion
- 52: transverse portion
- 54: calibration system
- 56: data storage unit
- 58: data processing unit
- 60: computer-readable storage medium
- 62: computer program
- 63: means for carrying out first method and second method
- 64: data model
- 66: global coordinate system

- D1: first data
- D2: second data
- D3: third data

## Claims

1. A method for calibrating a Doppler sensor system (30) mountable to a vehicle (10), the method comprising:
- obtaining first data (D1) indicative of Doppler sensor detections of an environment of the vehicle (10) originating from a plurality of Doppler sensors (32) mountable to the vehicle (10), wherein the Doppler sensor detections comprise angular information,
- estimating a vehicle motion vector based on the first data (D1), and determining an angular detection error based on the first data (D1) and based on the estimated vehicle motion vector, or
determining an angular detection error and/or a vehicle motion vector based on the first data (D1) using a trained data model (64), and
- providing second data (D2) indicative of the angular detection error and/or the vehicle motion vector.

2. The method according to claim 1, wherein the first data (D1) is associated with the vehicle (10) travelling on a straight path and/or with a yaw rate of the vehicle below a predetermined yaw rate threshold.

3. The method according to claim 1, wherein the vehicle motion vector is estimated based on additional third data (D3) indicative of the yaw rate of the vehicle (10).

4. The method of any one of the preceding claims, wherein estimating the vehicle motion vector comprises solving an optimization problem or determining a median of Doppler velocities of the first data (D1) corrected by corresponding angular information of the first data (D1), and/or
wherein determining the angular error comprises solving an optimization problem.

5. The method of any one of the preceding claims, wherein the determined angular detection error comprises a local angular detection error and/or a global angular detection error,
wherein the local angular detection error refers to an angular detection error that is specific for each point in a field of view (36) of a Doppler sensor (32) of the Doppler sensor system (30), and
wherein the global angular detection error refers to an angular detection error that applies systematically to the whole field of view (36) of a Doppler sensor (32) of the Doppler sensor system (30).

6. The method of any one of the preceding claims, further comprising enhancing an accuracy of the estimated vehicle motion vector using a random search algorithm and/or a gradient descent optimization.

7. The method of any one of the preceding claims, wherein the trained data model (64) comprises an artificial neural network.

8. The method of any one of claims 1 to 6, wherein estimating the vehicle motion vector comprises determining a first model of stationary and moving objects (38) based on the first data (D1) and estimating a preliminary vehicle motion vector based on the first model.

9. The method of claim 8, wherein estimating the vehicle motion vector further comprises determining a second model of stationary and moving objects based on the first data (D1) and based on the preliminary vehicle motion vector.

10. A method for estimating a vehicle motion vector of a vehicle (10) while the vehicle (10) is moving, the method comprising:
- obtaining first data (D1) indicative of Doppler sensor detections of an environment of the moving vehicle (10) originating from a plurality of Doppler sensors (32) mounted to the vehicle (10),
- calibrating the Doppler sensor system (30) mounted to the vehicle (10) using the method according to any one of the preceding claims or wherein the Doppler sensor system (30) is provided in a state in which it has been calibrated using the method according to any one of the preceding claims,
- determining a model of stationary and moving objects (38) based on the first data (D1), and
- estimating the vehicle motion vector based on the model.

11. A data processing apparatus (40) comprising means (63) for carrying out the method of any one of claims 1 to 9 and/or for carrying out the method of claim 10.

12. A computer program (62) comprising instructions which, when the program is executed by a computer, cause the computer to carry out the method of claims 1 to 9 and/or to carry out the method of claim 10.

13. A computer-readable storage medium (60) comprising instructions which, when executed by a computer, cause the computer to carry out the method of claims 1 to 9 and/or to carry out the method of claim 10.

14. A Doppler sensor system (30) mountable to a vehicle (10), the system (30) comprising:
- a plurality of Doppler sensors (32) mountable to the vehicle (10), and
- a data processing apparatus (40) according to claim 11,
wherein the plurality of Doppler sensors (32) are communicatively connected to the data processing apparatus (40).

15. A calibration system (54) for a Doppler sensor system (30), the calibration system (54) comprising a data processing apparatus (40) according to claim 11.
